# EUROPEAN PATENT APPLICATION

(11) **EP 2 111 018 A1**
(43) Date of publication of application: **21.10.2009**
(21) Application number: 08290376.6
(22) Date of filing: 17.04.2008
(51) Int. Cl.: H04L 29/08

(54) **Method for saving energy and radio resources in wireless communication devices**

(71) Applicant: Alcatel Lucent, 75008 Paris (FR)
(72) Inventor: Gondel, Antoine, 92370 Chaville (FR); Thiebaut, Laurent, 92160 Antony (FR)
(74) Representative: Croonenbroek, Thomas Jakob

(57) **Abstract**

The present invention refers to a method for saving energy and radio resources in a wireless communication network (1) comprising at least two network communication terminals (TMi), a network presence service comprising at least one presence server (PSi) and using at least one user contact-list subscribed by at least one of the terminals characterized in that said method comprises the following steps for the wireless communication network:
- detecting changes in terminal activity,
in case of change in a terminal activity from active mode to sleep mode,
- sending a status notification to the network presence service setting the presence status of said network communication terminal as user_idle,
- suspending the updates of the presence status of the at least one contact-list said terminal has subscribed to while the status of said network communication terminal is user_idle,
in case of change in terminal activity from sleep mode to active mode,
- sending a notification to the network presence service to set said network communication terminal status as user_active to resume the updates of the presence status of the at least one contact-list.

## Description

### BACKGROUND OF THE INVENTION

The present invention relates to the field of real-time communication networks. Such networks allow a user to subscribe to the presence status of his/her friends ("buddies") in order for his/her terminal to be able to display a contact-list that shows the communication capability and availability of each of these friends ("buddies"). Thus, the presence status of the connected terminals of the members of the contact-list(s) of a user needs to be updated when the communication availability of any of these buddies changes. In case of a huge contact-list or in case of subscription to several contact-lists, such updates occur frequently which lead to a high energy consumption for the battery in the case of portable devices due to the need for the terminal to wake up from energy saving sleep mode in order to receive such updates, to process the received update notifications and to acknowledge them. In addition, radio resources of the operator are highly solicited due to these frequent updates.

In the state of the art, two types of solutions are offered to deal with this problem. The first concerns event throttling, that is to say, the action of buffering in the network the changes of presence status and the action of sending the updates (presence status changes) to the terminal at limited time intervals. This solution allows to limit the number of updates but the terminal is waken up once the predetermined time interval has elapsed even though the user is not needing this information at that moment of time. The other solution is to provide only partial notification i.e. to enable the transmission of either only the changed parts or the full presence information. This solution does not limit the number of times the terminal is waken up but limits the size of the information being transferred.

### SUMMARY OF THE INVENTION

One object of the present invention is to provide a method for optimizing energy and radio resources in the case of wireless communication devices.

This optimization is achieved by a method for saving energy and radio resources in a wireless communication network comprising at least two network communication terminals, a network presence service comprising at least one presence server and using at least one user contact-list subscribed by at least one of the terminals. Said method comprises the following steps for the wireless communication network:
- detecting changes in terminal activity,
   in case of change in a terminal activity from active mode to sleep mode,
- sending a status notification to the network presence service setting the presence status of said network communication terminal as user_idle,
- suspending the updates of the presence status of the at least one contact-list said terminal has subscribed to while the status of said network communication terminal is user_idle,
   in case of change in terminal activity from sleep mode to active mode,
- sending a notification to the network presence service to set said network communication terminal status as user_active to resume the updates of the presence status of the at least one contact-list.

Preferably, an update frequency of the presence status is administrated by a throttling timer, **characterized in that** the suspension of the updates of the presence status of the at least one contact-list is achieved by setting the throttling timer of the updates of the presence status of the at least one contact-list associated with the terminal to a value corresponding to the remaining duration of the subscription to said at least one contact-list.

Alternatively, the suspension of the updates of the presence status of the at least one contact-list of a given terminal is achieved by the modification of the authorization rules that are related to said terminal in the presence service.

Advantageously, the presence service is provided through the use of extensible messaging and presence protocol (XMPP).

Alternatively, the presence service is provided through the use of Session Initiation Protocol (SIP)/Session Initiation Protocol Instant Messaging and Presence Leveraging Extensions (SIMPLE).

Preferably, the various presence notifications are compressed when they are exchanged over a radio interface.

Furthermore, wireless communication network comprising at least two network communication terminals, a presence service comprising at least one presence server and configured to use at least one user contact-list to which at least one of the terminals has subscribed to. Said wireless communication network also comprises
- means for detecting changes in terminal activity,
- means for sending a notification to the network presence server setting status of said network communication terminal as user_idle in case of change in a terminal activity from active mode to sleep mode,
- means for suspending the updates of the presence status of the at least one contact-list this terminal has subscribed to while the status of said network communication terminal is user_idle,
- means for sending a notification to the network presence server to set said network communication terminal status as user_active, in case of change in terminal activity from sleep mode to active mode, to resume the updates of the presence status of the at least one contact-list.

Preferably, network presence server comprising:
- means for receiving presence status notifications
- means for suspending the updates of the presence status of the at least one contact-list a terminal has subscribed to if a notification for setting said terminal as user_idle is received
- means for modifying terminals presence status
- means for sending presence status updates to terminals

Furthermore, network terminal comprising:
- means for detecting changes in said terminal activity
- means for sending a presence status notification as user_idle to a network presence server.

### BRIEF DESCRIPTION OF THE DRAWINGS

FIG.**1** is a diagram of a network.
FIG.**2** is a chart representing the status of the terminals of a contact-list at different times.

### DETAILED DESCRIPTION OF THE INVENTION

As used herein, the term "sleep mode" or "dormant mode" refers to the state of an electric or electronic device which is powered without being completely active in order to save energy, for example, the screen of the device can be dimmed and some functionalities can be suspended. Switching from the "active mode" to the "sleep mode" can be produced by a user action (e.g. locking the keyboard) or determined after a predefined delay of inactivity or any other suitable means.

As used herein, the term "contact-list" or "buddy-list" of a terminal refers to a list of other users whose presence status is needed by the owner of the terminal. Information displayed by the contact-list usually comprises presence status of the terminals of these other users but additional details can be added.

As used herein, the term "terminal" refers to any communication device (for example computer, personal digital assistant (PDA), cell phone...).

As used herein, the term "presence server" refers to a server dedicated to the management of the presence status of the contact-lists of the various users. It may be provided through the use of dedicated hardware as well as hardware capable of executing software in association with appropriate software. It can be a single dedicated processor, a single shared processor, or a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

As used herein, the term "Wireless Communication Network" depicts a wireless communication network that supports any wireless communication technology. Examples of such Wireless communication technologies are GSM/GERAN, UTRAN (UMTS (Universal Mobile Telecommunications System) Radio Access Network), E-UTRAN (Evolved UTRAN for 3GPP "Long Term Evolution" radio) defined by 3gpp but also EV-DO defined by 3gpp2, Wifi, Wimax,....

As used herein, the term "user_idle" corresponds to the status given in the presence service to a terminal which has subscribed to at least one user contact-list and which is in a sleep mode.

As used herein, the term "user_active" corresponds to the status given in the presence service to a terminal which has subscribed to at least one user contact-list and which is in an active mode.

The idea of the present invention is to avoid useless notifications/updates of the presence status of a contact-list being sent to a terminal when this terminal is in a sleep mode (energy saving mode). Said updates occur only in active mode whenever the presence status of a contact-list member is modified.

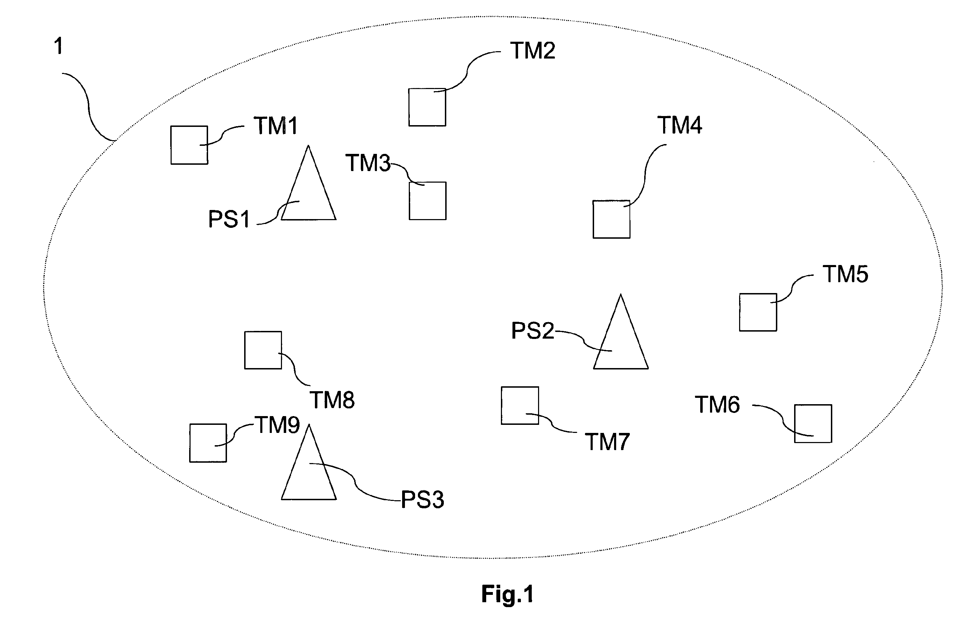

To better understand the present invention, Fig.1 represents an example of network 1 with a group of nine users who have each defined one contact list corresponding to the other users of the group. The network 1 comprises in this example:
- Nine terminals (TMx with x=1 to 9) with each terminal in this example having thus subscribed to one contact list that corresponds to the eight other terminals and three presence servers (PSx with x=1 to 3) representing the Presence Service. It has to be noted that the mechanism of the invention is independent from the decomposition of the presence service into different presence servers,
- Means for the terminals and the presence service to exchange presence information. Such means for exchanging presence information are for example radio communication means, cellular network devices or global systems for mobile communication devices.

At the network level, the contact-lists are managed by a presence service represented by presence servers. Presence service is widely provided by the use of Session Initiation Protocol (SIP) or Session Initiation protocol Instant Messaging and Presence Leveraging Extensions (SIMPLE) but other implementations are possible, for example using extensible Messaging and Presence Protocol (XMPP).

Each terminal comprises a Presence User Agent (PUA) which detects the terminal status and communicates with a presence service.

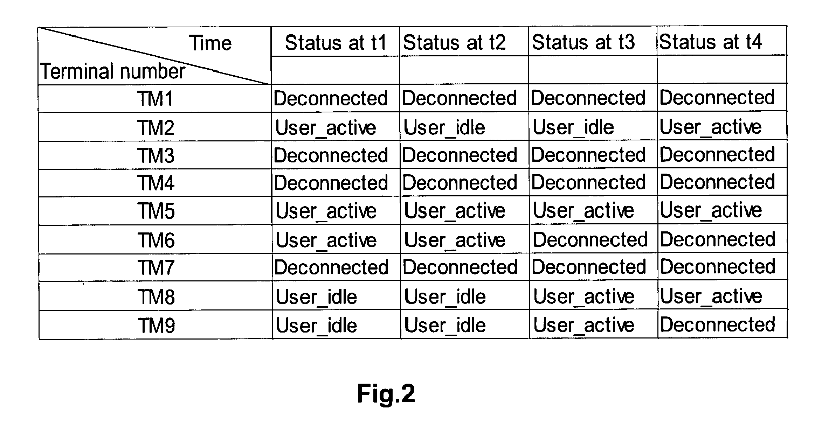

Fig.2 represents the status at different successive points of time t1, t2, t3 and t4 of the terminals of the network depicted in Fig.1.

The idea of the invention is to avoid notifications/updates linked with a contact-list subscribed by a terminal when they are useless for the user owning this terminal, that is to say, when said user is not about to communicate with another terminal of the contact-list or to look-up the contact-lists he/she has defined. When a terminal is in sleep mode (power-saving mode), it is considered that notifications/updates linked with a contact-list are useless for the user owning this terminal. Thus, in the present invention, presence status updates are suspended as soon as and as long as the terminal is in sleep mode and its status is set as user_idle. Referring to fig.2, between t1 and t2, TM2 status changes from user_active to user_idle. Therefore, at time t2, the new status of TM2 is not sent to TM8 and TM9 because they are also in a user_idle status and the presence updates/notifications linked with contact-list(s) are suspended towards these terminals. In the same way, TM2 is not updated about the status change of TM6 at instant t3. When, TM9 becomes active at t3, its status becomes user_active its contact-list is then updated once by the Presence Service of all the modifications that have occurred while TM9 was in a user_idle status and in particular of the user_idle status of TM2.

In practice, when the sleep mode of a terminal is detected, a notification (for example, a SIP publish method in case of a SIP implementation) is sent by the PUA of the terminal to the Presence Server (PS) of this terminal to set the presence status of the corresponding terminal as user_idle. This user_idle value is interpreted by the presence service as a request to be no more updated with latest presence status of the other terminals of the contact-lists this terminal has subscribed to. This corresponds to a suspension of the subscription to the presence status of the contact-lists.

Two alternative solutions can be considered to achieve this suspension.

The first one consists in giving a huge value, preferentially the remaining duration of the subscription, to the throttling timer associated with the contact-list(s) of this terminal. Thus, all the update notifications concerning the presence status of the contact-list members would be buffered until the throttling timer has elapsed, and the terminal is updated once with updated value of the presence status at the expiry of the throttling timer. If the terminal is reactivated, its PUA sends a notification (SIP publish method for example) to the PS to switch its presence status to user_active. This change of presence status is interpreted by the presence service as a request to resume sending updates to the corresponding terminal of notifications of the presence status of the contact-lists members. This corresponds to a reset of the throttling timer to its initial value and therefore all the buffered information are sent to the terminal.

The second solution refers to the use of a Watcher Local Agent (WLA) located within the presence server which is notified of the status changes of the terminal. At the reception of the notification, the WLA modifies the authorization rules of the PUA of the corresponding terminal to avoid contact-list notification delivery to this PUA when the status of the corresponding terminal is set as user_idle. This is achieved by setting the notification action as "blocked". The way to modify the notification action works as follow. The PUA is also a watcher on the contact-list created in the Presence Server (PS). The notification policy is dictated by authorization rules in the PS. Normally, such presence authorization rules specify what presence information can be given to which watchers and when. These rules are uploaded by means of a particular protocol called extensible markup language (XML) Configuration Access Protocol (XCAP). The WLA uses e.g. the XCAP protocol for modifying the authorization rules for that PUA.

In the same way as previously, when the terminal is reactivated, its PUA sends a notification to the PS to switch its presence status to user_active which is interpreted by the presence service as a request to resume sending updates to the corresponding terminal of notifications of the presence status of the contact-lists members. The WLA modifies the authorization rules again and sets the notification action as "allowed".

It has to be noted that in both cases, the subscription to the presence status of the contact-list is not canceled, which would require additional dialogs between the terminal and the presence server to un-subscribe and subscribe again, but is only suspended. Moreover, while the presence status of a contact-list member is set as user_idle, the other terminals can still send messages to said member. Indeed, the blocking of the notification messages concerns only the presence status notifications but does not modify anything in the other types of messages.

Besides, said terminal periodically refreshes its subscription to one or several contact-lists and can be notified at that time of the latest changes of the presence information.

Thus, only two additional messages are needed to modify the presence status of the terminal in the presence service when the terminal mode is switched between user_active and user_idle and inversely but in return multiple useless update notifications are avoided.

The present invention therefore allows to save energy and radio resources by suspending notifications of the presence status of the contact-lists members when the corresponding terminal is in sleep mode.

Besides, this solution is fully compatible with the other existing solutions of the state of the art presented in introduction. Indeed, event throttling method and partial notification mechanism can be used when the terminal is in a user_active mode. Moreover, for a further optimization of the radio resources, presence status notifications, in the case of SIP/SIMPLE implementation, can be compressed to minimize their sizes.

## Claims

1. Method for saving energy and radio resources in a wireless communication network comprising at least two network communication terminals, a network presence service comprising at least one presence server and using at least one user contact-list subscribed by at least one of the terminals **characterized in that** said method comprises the following steps for the wireless communication network:
- detecting changes in terminal activity,
in case of change in a terminal activity from active mode to sleep mode,
- sending a status notification to the network presence service setting the presence status of said network communication terminal as user_idle,
- suspending the updates of the presence status of the at least one contact-list said terminal has subscribed to while the status of said network communication terminal is user_idle,
in case of change in terminal activity from sleep mode to active mode,
- sending a notification to the network presence service to set said network communication terminal status as user_active to resume the updates of the presence status of the at least one contact-list.

2. Method for saving energy and radio resources in a wireless communication network in accordance with claim 1, where an update frequency of the presence status is administrated by a throttling timer, **characterized in that** the suspension of the updates of the presence status of the at least one contact-list is achieved by setting the throttling timer of the updates of the presence status of the at least one contact-list associated with the terminal to a value corresponding to the remaining duration of the subscription to said at least one contact-list.

3. Method for saving energy and radio resources in a wireless communication network in accordance with claim 1 **characterized in that** the suspension of the updates of the presence status of the at least one contact-list of a given terminal is achieved by the modification of the authorization rules that are related to said terminal in the presence service.

4. Method for saving energy and radio resources in a wireless communication network in accordance with one of the previous claims **characterized in that** the presence service is provided through the use of eXtensible Messaging and Presence Protocol (XMPP).

5. Method for saving energy and radio resources in a wireless communication network in accordance with one of the claims from 1 to 3 **characterized in that** the presence service is provided through the use of Session Initiation Protocol (SIP)/Session Initiation Protocol Instant Messaging and Presence Leveraging Extensions (SIMPLE).

6. Method for saving energy and radio resources in a wireless communication network in accordance with any of the previous claims **characterized in that** the various presence notifications are compressed when they are exchanged over a radio interface.

7. Wireless communication network comprising at least two network communication terminals, a presence service comprising at least one presence server and configured to use at least one user contact-list to which at least one of the terminals has subscribed to **characterized in that** said wireless communication network also comprises
- means for detecting changes in terminal activity,
- means for sending a notification to the network presence server setting status of said network communication terminal as user_idle in case of change in a terminal activity from active mode to sleep mode,
- means for suspending the updates of the presence status of the at least one contact-list this terminal has subscribed to while the status of said network communication terminal is user_idle,
- means for sending a notification to the network presence server to set said network communication terminal status as user_active, in case of change in terminal activity from sleep mode to active mode, to resume the updates of the presence status of the at least one contact-list.

8. Network presence server **characterized in that** said it comprises:
- means for receiving presence status notifications,
- means for suspending the updates of the presence status of the at least one contact-list a terminal has subscribed to if a notification for setting said terminal as user_idle is received,
- means for modifying terminals presence status,
- means for sending presence status updates to terminals.

9. Network terminal **characterized in that** said terminal comprises:
- means for detecting changes in said terminal activity,
- means for sending a presence status notification as user_idle to a network presence server.
